(19)

Europäisches
Patentamt
European
Patent Office
Office européen
des brevets

(11) **EP 4 678 317 A1**

(12) **EUROPEAN PATENT APPLICATION**

(43) Date of publication:
**14.01.2026 Bulletin 2026/03**

(51) International Patent Classification (IPC):
**B23C 3/12** *(2006.01)* **G05B 19/41** *(2006.01)*

(21) Application number: **25186214.0**

(22) Date of filing: **30.06.2025**

(52) Cooperative Patent Classification (CPC):
**G05B 19/41; B23B 51/105; B23C 3/12;**
G05B 2219/34092; G05B 2219/45151

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **08.07.2024 JP 2024109715**

(71) Applicant: **Star Micronics Co., Ltd.
Shizuoka-shi, Shizuoka 422-8654 (JP)**

(72) Inventor: **Kamo, Shotaro
Shizuoka-shi, Shizuoka (JP)**

(74) Representative: **Grünecker Patent- und
Rechtsanwälte
PartG mbB
Leopoldstraße 4
80802 München (DE)**

(54) **MACHINE TOOL AND METHOD OF DETERMINING CONTROL POSITION THEREOF**

(57) To provide a configuration that can easily avoid interference between a deburring tool and a workpiece due to command errors and the like when commanding the deburring tool to move in directions of three straight axes with respect to the workpiece.

A control unit of a machine tool: acquires a value (CD) representing a diameter corresponding to a periphery when a hole is viewed from a direction of a machining center axis (X-axis direction) and a value (OD) representing a diameter corresponding to a circumference passing through the periphery around a spindle axis on a cross section perpendicular to the spindle axis; determines a straight axis coordinate corresponding to a cutting position that changes along the periphery on a straight axis (Z-axis) and a rotation angle corresponding to the cutting position on a rotation axis (C-axis) based on the value (CD) and the value (OD); and controls a relative positional relationship in the direction of the spindle axis (Z-axis direction) to the straight axis coordinate and controls rotation of a spindle to the rotation angle so that the cutting position changes along the periphery.

FIG. 9

EP 4 678 317 A1

## Description

### CROSS-REFERENCES

The application claims priority of Japanese Patent Application No. 2024-109715 filed on July 8, 2024. The contents of this application are incorporated herein by reference in their entirety.

### BACKGROUND OF THE INVENTION

#### 1. Field of the Invention

The present invention relates to a machine tool capable of cutting a periphery of a hole oriented perpendicular to a spindle axis in a workpiece and to a method of determining a control position of a machine tool.

#### 2. Description of the Related Art

As a machine tool, an NC (numerical control) lathe that machines a cylindrical workpiece gripped by a spindle with a tool is known. When a cross hole is formed in the workpiece with a rotary tool oriented along a machining center axis perpendicular to the spindle axis, burrs are produced around a periphery of the cross hole. Therefore, burrs are removed with a specialized tool attached to a tool post. The NC lathe is capable of executing processing of removing burrs in the periphery of the cross hole by controlling, according to a machining program created by an operator, relative cutting positions of the workpiece by the specialized tool in the three directions of an X-axis, a Y-axis, and a Z-axis.
A machine tool disclosed in WO 2014/178355 performs chamfering of an opening edge of a cross hole by moving a conical tool with a conical cutting edge in the three directions.

### SUMMARY OF THE INVENTION

In the machining program, it is not easy to command the movement of the specialized tool in the three directions of the X-axis, the Y-axis, and the Z-axis in order to remove burrs in the periphery of the cross hole. When the movement command is not appropriate, interference between the specialized tool and the workpiece may occur.
Note that problems such as that described above exists not only in lathes but also in various machine tools such as machining centers.

The present invention discloses a configuration that can easily avoid interference between a deburring tool and a workpiece due to command errors and the like when commanding the deburring tool to move in directions of three straight axes with respect to the workpiece.

A machine tool according to the present invention has an aspect that includes:

a spindle which rotates together with a workpiece around a spindle axis;
a tool post to which is attached a deburring tool that cuts a periphery of a hole in an orientation along a machining center axis perpendicular to the spindle axis in the workpiece; and
a control unit which controls a relative positional relationship between the spindle and the tool post on a straight axis along the spindle axis and a rotation of the spindle on a rotation axis around the spindle axis, wherein
the control unit
acquires a value (CD) representing a diameter corresponding to the periphery when the hole is viewed from a direction of the machining center axis along the machining center axis and a value (OD) representing a diameter corresponding to a circumference passing through the periphery around the spindle axis on a cross section perpendicular to the spindle axis,
determines a straight axis coordinate corresponding to a cutting position that changes along the periphery on the straight axis and a rotation angle corresponding to the cutting position on the rotation axis based on the value (CD) and the value (OD), and
controls the relative positional relationship in the direction of the spindle axis along the spindle axis to the straight axis coordinate and controls rotation of the spindle to the rotation angle so that the cutting position changes along the periphery.

In addition, a method of determining a control position of a machine tool according to the present invention has an aspect of a method of determining a control position of a machine tool which includes a spindle which rotates together with a workpiece around a spindle axis and a tool post to which is attached a deburring tool that cuts a periphery of a hole in an orientation along a machining center axis perpendicular to the spindle axis in the workpiece, the machine tool controlling a relative positional relationship between the spindle and the tool post on a straight axis along the spindle axis and a rotation of the spindle on a rotation axis around the spindle axis, the method of determining a control position of a machine tool including:

a first step of acquiring a value (CD) representing a diameter corresponding to the periphery when the hole is viewed from a direction of the machining center axis along the machining center axis and a value (OD) representing a diameter corresponding to a circumference passing through the periphery around the spindle axis on a cross section perpendicular to the spindle axis; and
a second step of determining a straight axis coordinate corresponding to a cutting position by the deburring tool on the straight axis and a rotation angle corresponding to the cutting position on the rotation axis based on the value (CD) and the value (OD) so that the cutting position changes along the periphery.

According to the present invention, a configuration that can easily avoid interference between a deburring tool and a workpiece due to command errors and the like when commanding the deburring tool to move in directions of three straight axes with respect to the workpiece can be provided.

BRIEF DESCRIPTION OF THE DRAWINGS

FIG. 1 is a front view schematically showing a configuration example of a machine tool;
FIG. 2 is a block diagram schematically showing a configuration example of an electric circuit of a machine tool;
FIG. 3A is a plan view schematically showing an example of a cylindrical workpiece having a cross hole, FIG. 3B is a longitudinal sectional view at a position indicated by A1-A1 in FIG. 3A, and FIG. 3C is a transverse sectional view at a position indicated by A2-A2 in FIG. 3A;
FIG. 4A is a plan view schematically showing an example of a cutting position that changes along a periphery of a cross hole, and FIGS. 4B and 4C are sectional views schematically showing an example in which a deburring tool oriented along a spindle axis is arranged on an outer peripheral surface of a cylindrical workpiece;
FIGS. 5A and 5B are sectional views schematically showing an example in which a deburring tool oriented along a spindle axis is arranged on an inner peripheral surface of a cylindrical workpiece;
FIG. 6 is a diagram schematically showing an example of determining a Z-axis coordinate Zp and a C-axis angle Cp corresponding to a cutting position based on a diameter value (CD) of a cross hole and an outer diameter value (OD) of a workpiece;
FIG. 7 is a diagram schematically showing an example of determining the Z-axis coordinate Zp and the C-axis angle Cp corresponding to a cutting position based on a diameter value (CD) of a cross hole and an inner diameter value (OD) of a workpiece;
FIG. 8 is a flow chart schematically showing an example of deburring processing;
FIG. 9 is a diagram schematically showing an example of a Z-axis movement and a C-axis rotation of a workpiece during deburring;
FIG. 10 is a diagram schematically showing an example of determining the Z-axis coordinate Zp and the C-axis angle Cp corresponding to a cutting position based on a diameter value (CD) of a long hole, an inner diameter value (OD) of a workpiece, and a center-to-center distance value (LC) of arc parts; and
FIG. 11 is a flow chart schematically showing an example of deburring processing of a periphery of a long hole.

DESCRIPTION OF THE PREFERRED EMBODIMENTS

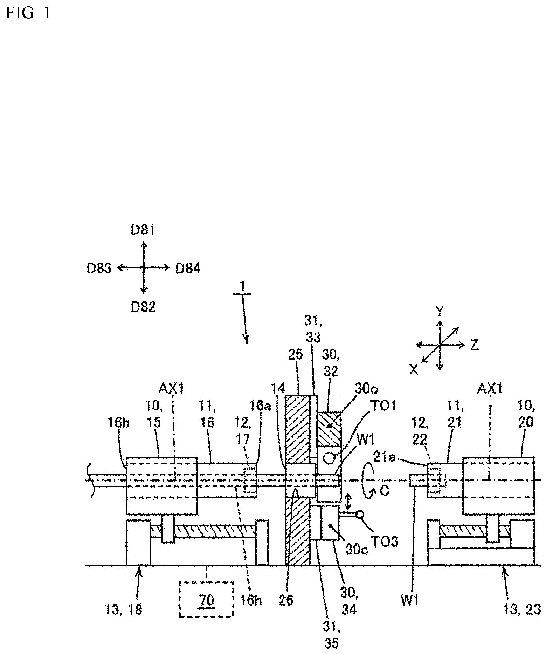

Hereinafter, an embodiment of the present invention will be described. Needless to say, the following embodiment is merely illustrative of the present invention and not all of the features shown in the embodiment may be essential to solutions of the invention.
(1) Overview of aspects included in present invention:
First, an overview of aspects included in the present invention will be described with reference to examples shown in FIGS. 1 to 11. Note that since diagrams in the present application are diagrams schematically showing examples, magnification in each direction shown in the drawings may vary and the drawings may not be consistent with each other. Needless to say, each element of the present aspects is not limited to the specific examples denoted by reference signs.

First Aspect

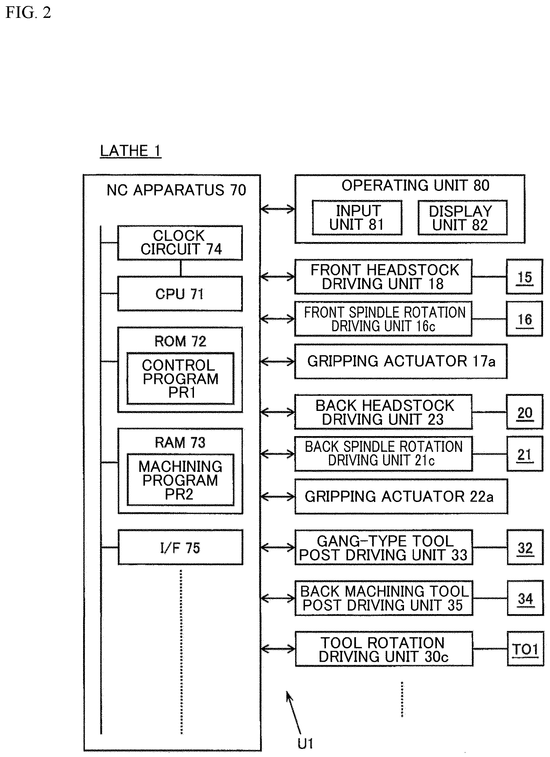

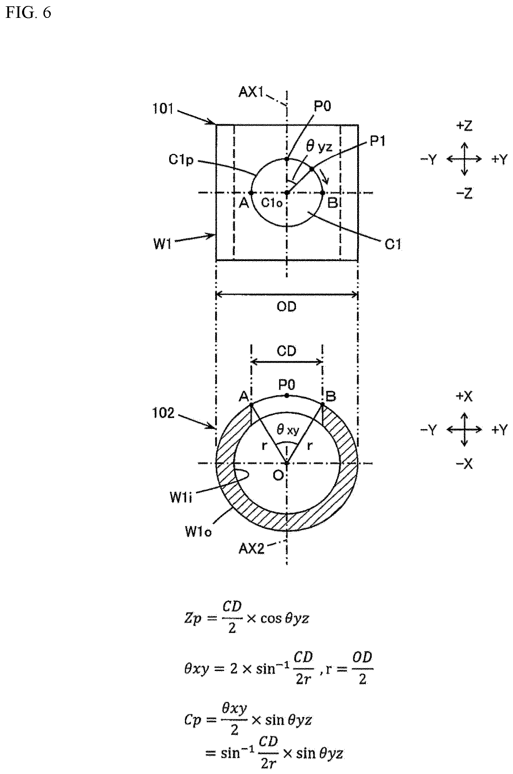

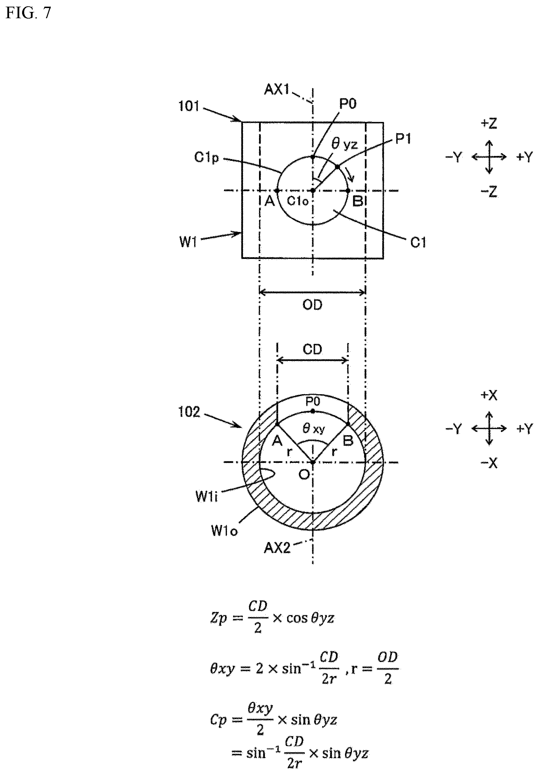

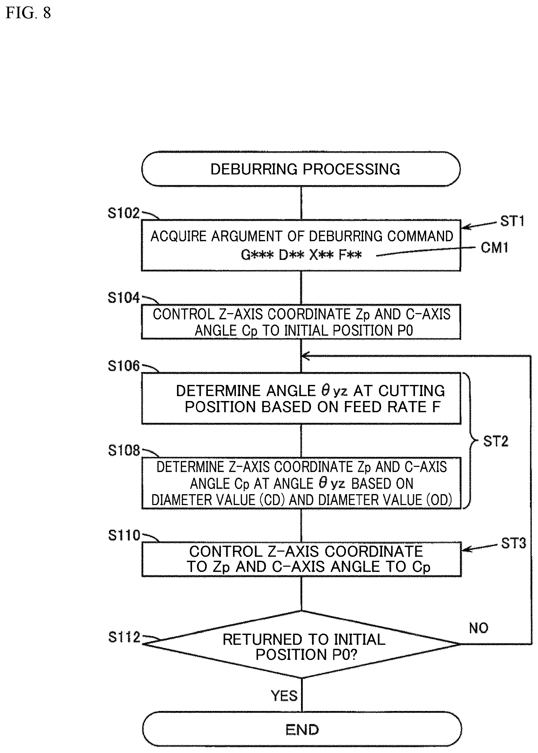

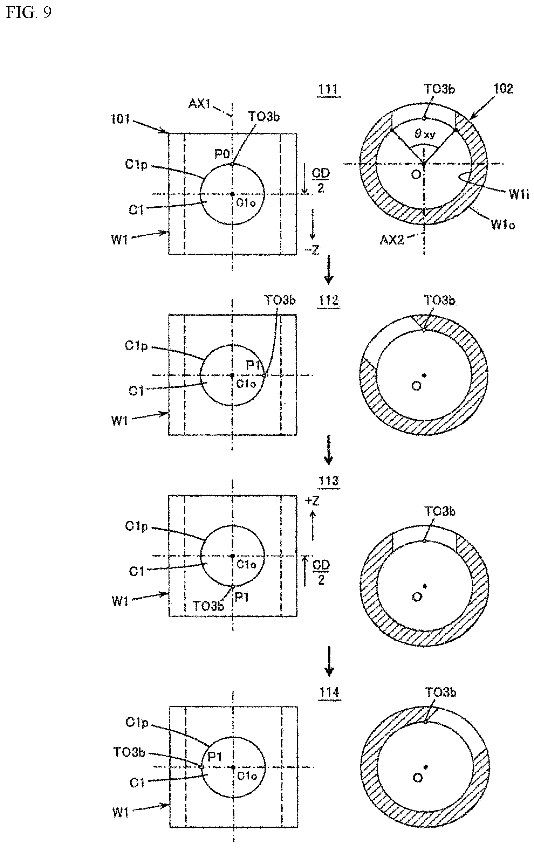

As illustrated in FIGS. 1 and 2, a machine tool (for example, a lathe 1) according to one aspect includes a spindle 11, a tool post 30, and a control unit U1. The spindle 11 rotates together with a workpiece W1 around a spindle axis AX1. A deburring tool TO3 that cuts a periphery C1p of a hole (for example, a cross hole C1) in an orientation along a machining center axis AX2 perpendicular to the spindle axis AX1 in the workpiece W1 is attached to the tool post 30. The control unit U1 controls a relative positional relationship between the spindle 11 and the tool post 30 on a straight axis (for example, a Z-axis) along the spindle axis AX1 and a rotation of the spindle 11 on a rotation axis (for example, a C-axis) around the spindle axis AX1. As illustrated in FIG. 8 or the like, the control unit U1 acquires a value (CD) representing a diameter corresponding to the periphery C1p when the hole (C1) is viewed from a direction of the machining center axis (for example, an X-axis direction) along the machining center axis AX2 and a value (OD) representing a diameter corresponding to a circumference passing through the periphery C1p around the spindle axis AX1 on a cross section perpendicular to the spindle axis AX1 (for example, a cross section shown in a transverse sectional view 102 in FIGS. 6 and 7). As illustrated in FIGS. 6 to 8 and the like, the control unit U1 determines a straight axis coordinate (for example, a Z-axis coordinate Zp) corresponding to a cutting position P1 that changes along the periphery C1p on the straight axis (Z-axis) and a rotation angle (for example, a C-axis angle Cp) corresponding to the cutting position P1 on the rotation axis (C-axis) based on the value (CD) and the value (OD). As illustrated in FIGS. 8 and 9, the control unit U1 controls the relative positional relationship in the direction of the spindle axis (for example, the Z-axis direction) along the spindle axis AX1 to the straight axis coordinate (Zp) and controls rotation of the spindle 11 to the rotation angle (Cp) so that the cutting position P1 changes along the periphery C1p.

Accordingly, if the value (CD) representing the diameter of the hole (C1) viewed from the machining center axis direction (X-axis direction) and the value (OD) representing the outer diameter or the inner diameter of the workpiece W1 viewed from the spindle axis direction (Z-axis direction) can be acquired, the periphery C1p of the hole (C1) is cut by the deburring tool TO3. In doing so, the control unit U1 need only control the two axes of the straight axis (Z-axis) along the spindle axis AX1 and the rotation axis (C-axis) around the spindle axis AX1 instead of control in the directions of three straight axes. Since a relative drive axis coordinate of the deburring tool TO3 with respect to the workpiece W1 is controlled in correspondence with the cutting position P1 while the rotation angle (Cp) of the workpiece W1 is controlled in correspondence with the cutting position P1 around the spindle axis AX1, interference between the deburring tool TO3 and the workpiece W1 is easily avoided.

Therefore, the aspect described above can provide a machine tool that can easily avoid interference between a deburring tool and a workpiece due to command errors and the like when commanding the deburring tool to move in directions of three straight axes with respect to the workpiece.

In this case, the control unit may move the spindle along the spindle axis without moving the tool post, move the tool post along the spindle axis without moving the spindle, or move both the spindle and the tool post along the spindle axis.

A hole oriented along the machining center axis can also be described as a hole centered on the machining center axis. Holes oriented along the machining center axis include cross holes that connect an outer peripheral surface to an inner peripheral surface in a cylindrical workpiece, horizontal holes that cross the workpiece along the machining center axis, and bottomed holes that are recessed from the outer peripheral surface to the middle of the workpiece along the machining center axis.

The periphery to be cut by the deburring tool may be the outer peripheral surface of a workpiece or the inner peripheral surface of the workpiece. For example, when a cross hole is formed in a cylindrical workpiece, peripheral burrs may occur on both the outer peripheral surface of the workpiece and the inner peripheral surface of the workpiece. The deburring tool need only be capable of cutting the periphery of a hole oriented along the machining center axis in the workpiece and a rotary tool such as an endmill can be used. The periphery when viewing the hole from the direction of the machining center axis need only have a portion that can be described as a diameter and may include a straight part and the like. A diameter corresponding to the periphery means a diameter in a portion that can be described as a diameter.

The value (CD) may be a diameter corresponding to the periphery, a radius corresponding to the periphery, a value that can be converted into a diameter corresponding to the periphery, and the like.

The value (OD) may be a diameter corresponding to a circumference passing through the periphery, a radius corresponding to a circumference passing through the periphery, a value that can be converted into a diameter corresponding to a circumference passing through the periphery, and the like.

The additional remarks presented above are also applied to the following aspects.

Second Aspect

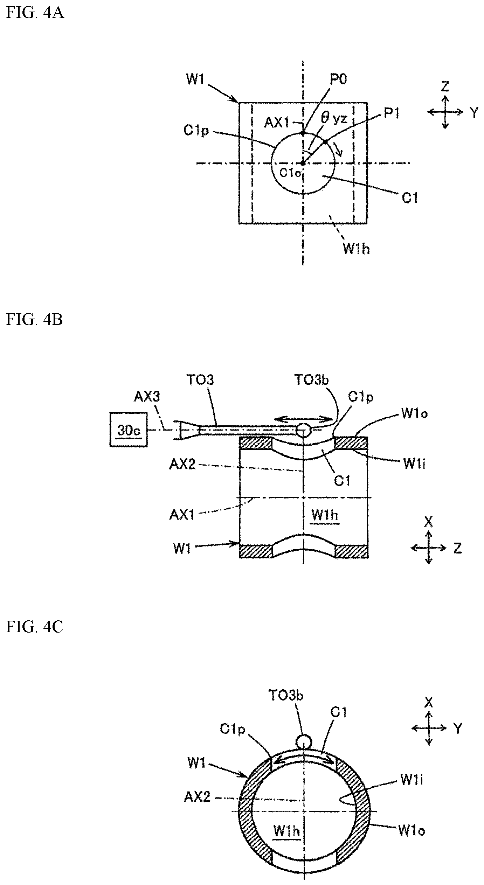

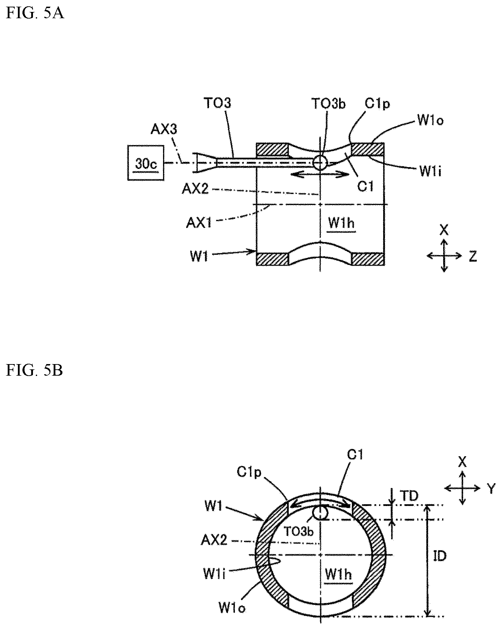

As illustrated in FIGS. 4B and 5A, the deburring tool TO3 may be attached to the tool post 30 in an orientation along the spindle axis AX1. The tool post 30 may rotate the deburring tool TO3 around a deburring tool center axis AX3 along the spindle axis AX1.

In the case of the above, the periphery C1p of the hole (C1) is cut by the deburring tool TO3 that rotates around the deburring tool center axis AX3 along the spindle axis AX1. Therefore, even when the deburring tool TO3 cannot be arranged in an orientation along the machining center axis AX2 to begin with or when another tool in an orientation along the machining center axis AX2 is being used, deburring of the periphery of the hole in an orientation along the machining center axis can be performed.

Third Aspect

As illustrated in FIGS. 5A, 5B, and the like, the workpiece W1 may have a cylindrical shape. The deburring tool TO3 may be attached to the tool post 30 in an orientation along the spindle axis AX1. The tool post 30 may rotate the deburring tool TO3 around the deburring tool center axis AX3 along the spindle axis AX1. A maximum diameter TD around the deburring tool center axis AX3 in a portion in the deburring tool TO3 to be inserted into the cylindrical workpiece W1 may be smaller than an inner diameter ID of the workpiece W1.

In the case of the above, by inserting the deburring tool TO3 that rotates around the deburring tool center axis AX3 along the spindle axis AX1 into the cylindrical workpiece W1, the periphery C1p of the cross hole (C1) is cut inside the workpiece W1. When the cylindrical workpiece W1 has a plurality of cross holes (C1) in an orientation along the machining center axis AX2, since the aspect described above enables an amount of retraction of the deburring tool TO3 before and after deburring inside the workpiece W1 to be reduced, a cycle time of workpiece machining can be reduced.

Fourth Aspect

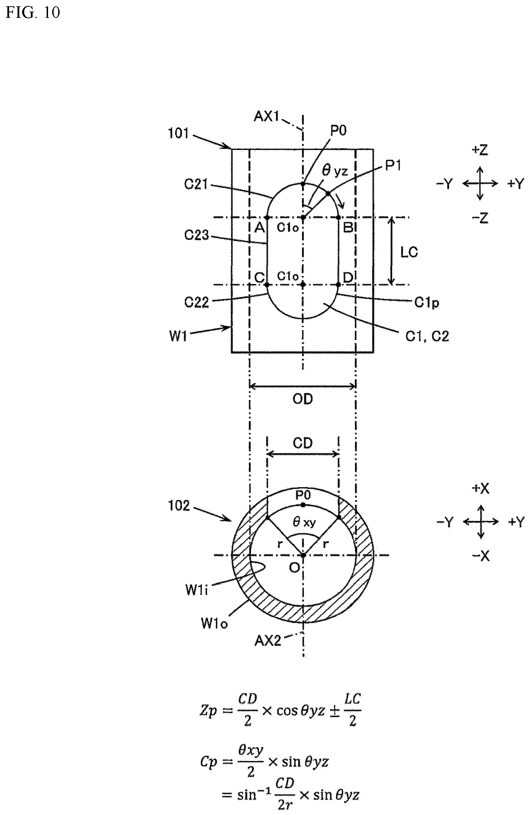

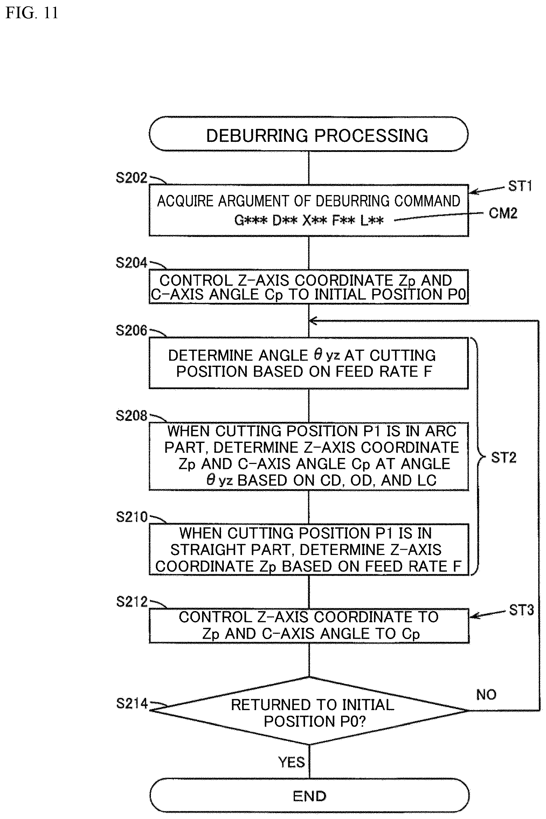

As illustrated in FIG. 10, the periphery C1p when viewed from a direction of the machining center axis (X-axis direction) may include an arc-shaped first arc part C21, an arc-shaped second arc part C22, and a straight part C23 that connects the first arc part C21 to the second arc part C22. As illustrated in FIG. 11, the control unit U1 may acquire the value (CD), the value (OD), and a value (LC) representing a center-to-center distance between the first arc part C21 and the second arc part C22. Based on the value (CD), the value (OD), and the value (LC), the control unit U1 may determine the straight axis coordinate (Zp) corresponding to the cutting position P1 and the rotation angle (Cp) corresponding to the cutting position P1 with respect to each of the first arc part C21, the second arc part C22, and the straight part C23.

The control unit U1 may control the relative positional relationship in the direction of the spindle axis (Z-axis direction) to the straight axis coordinate (Zp) and control rotation of the spindle 11 to the rotation angle (Cp) so that the cutting position P1 changes along the first arc part C21, the second arc part C22, and the straight part C23.

Accordingly, if the value (CD), the value (OD), and the value (LC) representing the center-to-center distance between the first arc part C21 and the second arc part C22 can be acquired, the periphery C1p of a long hole C2 is cut by the deburring tool TO3. In doing so, the control unit U1 need only control the two axes of the straight axis (Z-axis) along the spindle axis AX1 and the rotation axis (C-axis) around the spindle axis AX1 instead of control in the directions of three straight axes. Therefore, the aspect described above can easily avoid interference between the deburring tool and the workpiece during deburring of a periphery of the long hole.

In this case, a diameter corresponding to a periphery means a diameter in the first arc part and the second arc part.

The terms "first", "second", ... in the present application are used to identify each constituent element included in a plurality of constituent elements with similarities and do not imply order. These additional remarks are also applied to the following aspects.

Fifth Aspect

A ball endmill may be attached to the tool post 30 as the deburring tool TO3. The tool post 30 may rotate the ball endmill around a center axis of the ball endmill (for example, the deburring tool center axis AX3).

The cutting position P1 of the periphery C1p of the hole (C1) in an orientation along the machining center axis AX2 in the workpiece W1 is controlled by the straight axis coordinate (Zp) and the rotation angle (Cp), and due to the deburring tool TO3 being a ball endmill, the periphery C1p is cut so that an amount of cutting is constant over the entire periphery C1p. Accordingly, with respect to the periphery C1p of various holes (C1), deburring of the periphery C1p of the holes (C1) can be performed using a general-purpose ball endmill. Therefore, the aspect described above can provide a favorable example of performing deburring of the periphery of holes.

Sixth Aspect

In addition, a method of determining a control position according to one aspect is a method of determining a control position of a machine tool (1) which includes a spindle 11 which rotates together with a workpiece W1 around a spindle axis AX1 and a tool post 30 to which is attached a deburring tool TO3 that cuts a periphery C1p of a hole (C1) in an orientation along a machining center axis AX2 perpendicular to the spindle axis AX1 in the workpiece W1, the machine tool (1) controlling a relative positional relationship between the spindle 11 and the tool post 30 on a straight axis (Z-axis) along the spindle axis AX1 and a rotation of the spindle 11 on a rotation axis (C-axis) around the spindle axis AX1, the method of determining a control position of the machine tool (1) including steps (a1) and (a2) below as illustrated in FIGS. 8 and 11:

> (a1) a first step ST1 of acquiring a value (CD) representing a diameter corresponding to the periphery C1p when the hole (C1) is viewed from a direction of the machining center axis (X-axis direction) along the machining center axis AX2 and a value (OD) representing a diameter corresponding to a circumference passing through the periphery C1p around the spindle axis AX1 on a cross section perpendicular to the spindle axis AX1; and
> (a2) a second step ST2 of determining a straight axis coordinate (Zp) corresponding to a cutting position P1 by the deburring tool TO3 on the straight axis (Z-axis) and a rotation angle (Cp) corresponding to the cutting position P1 on the rotation axis (C-axis) based on the value (CD) and the value (OD) so that the cutting position P1 changes along the periphery C1p.

The aspect described above can provide a method of determining a control position of a machine tool that can easily avoid interference between a deburring tool and a workpiece due to command errors and the like when commanding the deburring tool to move in directions of three straight axes with respect to the workpiece.

(2) Specific example of configuration of machine tool:

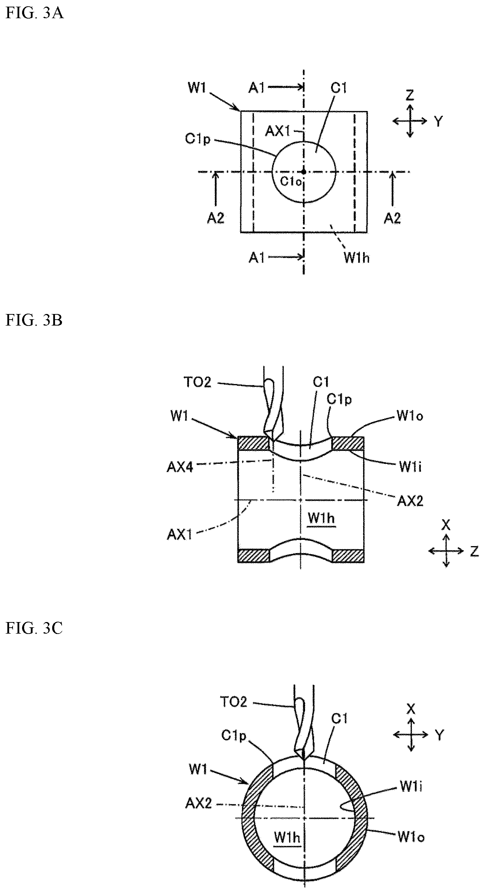

FIG. 1 is a front view schematically illustrating a configuration of the lathe 1 as an example of a machine tool. FIG. 2 schematically illustrates a configuration of an electric circuit of the lathe 1. FIGS. 3A to 3C schematically illustrate the cylindrical workpiece W1 having the cross hole C1. In this case, FIG. 3A is a plan view of the workpiece W1, FIG. 3B is a longitudinal sectional view at a position indicated by A1-A1 in FIG. 3A, and FIG. 3C is a transverse sectional view at a position indicated by A2-A2 in FIG. 3A.

In FIG. 1, reference sign D81 indicates an upward direction, reference sign D82 indicates a downward direction, reference sign D83 indicates a leftward direction, and reference sign D84 indicates a rightward direction. Note that these directions are based on a direction in which the lathe 1 shown in FIG. 1 is viewed. As shown in FIGS. 1 and 3A to 3C, control axes of the lathe 1 include the X-axis denoted by "X", the Y-axis denoted by "Y", the Z-axis denoted by "Z", and the C-axis denoted by "C". In this case, the X-axis, the Y-axis, and the Z-axis are straight axes while the C-axis is a rotation axis. The Z-axis direction is a spindle axis direction along the spindle axis AX1 to be a rotation center of the workpiece W1 and is a horizontal direction in FIG. 1. The X-axis direction is a direction perpendicular to the Z-axis and while the X-axis direction is a horizontal direction in FIG. 1, the X-axis direction may be a direction oriented upward and downward (upward direction D81 and downward direction D82). The Y-axis direction is a direction perpendicular to both the Z-axis and the X-axis. The C-axis is a rotation axis around the spindle axis AX1. Note that drawings to be referred to in the present specification simply show examples for describing aspects of the present application and are not intended to limit aspects of the present application. Descriptions of positional relationships of respective parts are simply illustrative. Therefore, reversing left and right sides, reversing the direction of rotation, and the like are also included in aspects of the present application. Identification of direction, position, and the like is not limited to exact congruence and includes deviations from exact congruence due to error.

The lathe 1 is an NC lathe including a headstock 10 provided with a spindle 11 having a gripping unit 12, a headstock driving unit 13, a supporting bed 25 with an attachment hole 26 for a guide bush 14, a tool post 30, a tool post driving unit 31, and an NC apparatus 70. In this case, the headstock 10 is a term collectively describing a front headstock 15 and a back headstock 20 that is also referred to as an opposite headstock. A front spindle 16 having a gripping unit 17 such as a collet is built into the front headstock 15. A back spindle 21 having a gripping unit 22 such as a collet is built into the back headstock 20. The spindle 11 is a term collectively describing the front spindle 16 and the back spindle 21 that is also referred to as an opposite spindle. The gripping unit 12 is a term collectively describing the gripping unit 17 and the gripping unit 22. The headstock driving unit 13 is a term collectively describing a front headstock driving unit 18 that moves the front headstock 15 along the Z-axis and the back headstock driving unit 23 that moves the back headstock 20 at least along the Z-axis. The lathe 1 shown in FIGS. 1 and 2 is a spindle-moving lathe in which the front spindle 16 moves in the Z-axis direction.

The front spindle 16 releasably grips the cylindrical workpiece W1 inserted, for example, from a rear end 16b, with the gripping unit 17 and can rotate together with the workpiece W1 around the spindle axis AX1. The front spindle 16 has a through-hole 16h that penetrates along the spindle axis AX1.

When the workpiece W1 prior to machining is a short material, the workpiece W1 may be supplied to the gripping unit 17 from a front end 16a of the front spindle 16. The NC apparatus 70 rotates the front spindle 16 around the spindle axis AX1 by driving a front spindle rotation driving unit 16c shown in FIG. 2 and controls a gripping state of the gripping unit 17 by driving a gripping actuator 17a shown in FIG. 2. The gripping unit 17 can be constituted of, for example, a collet. The front headstock driving unit 18 moves the front headstock 15 in the Z-axis direction according to a command from the NC apparatus 70. Therefore, the workpiece W1 being gripped by the front spindle 16 moves in the Z-axis direction.

A front end 21a of the back spindle 21 opposes the front end 16a of the front spindle 16. The back spindle 21 releasably grips the cylindrical workpiece W1 which is being machined and which protrudes forward from the front end 16a of the front spindle 16 with the gripping unit 22 and can rotate together with the workpiece W1 around the spindle axis AX1. The NC apparatus 70 rotates the back spindle 21 around the spindle axis AX1 by driving a back spindle rotation driving unit 21c shown in FIG. 2 and controls a gripping state of the gripping unit 22 by driving a gripping actuator 22a shown in FIG. 2. The gripping unit 22 can be constituted of, for example, a collet. The back headstock driving unit 23 moves the back headstock 20 in the Z-axis direction according to a command from the NC apparatus 70 and further moves the back headstock 20 in the X-axis direction or the Y-axis direction.

The guide bush 14 is attached to the supporting bed 25 in a state of being inside the attachment hole 26 of the supporting bed 25 and slidably supports the workpiece W1 protruding toward the back spindle 21 from the front spindle 16 (rightward direction D84) in the Z-axis direction. A portion which protrudes toward the back spindle 21 from the guide bush 14 in the workpiece W1 is to be machined by a tool TO1. When the guide bush is not in use, a front part of the front spindle 16 is inserted into the attachment hole 26 and a portion which protrudes toward the back spindle 21 from the front spindle 16 in the workpiece W1 is to be machined by the tool TO1.

A plurality of tools TO1 for machining the workpiece W1 gripped by at least one of the front spindle 16 and the back spindle 21 are attached to the tool post 30. The plurality of tools TO1 include cutting tools including a cut-off tool and rotary tools including a rotary drill and an endmill.

Rotary tools include a cross tool TO2 shown in FIG. 3B, the deburring tool TO3, and the like (for example, a ball endmill). The tool post 30 shown in FIG. 1 is a term collectively describing a gang-type tool post 32 and a back machining tool post 34. While only the deburring tool TO3 is shown on the back machining tool post 34 shown in FIG. 1, the tool TO1 is to collectively describe tools to be attached to the tool post 30 including the gang-type tool post 32 and the back machining tool post 34. Each tool post 30 includes a tool rotation driving unit 30c that rotates a rotary tool around a rotary tool center axis. The tool TO1 shown in FIG. 2 means a rotary tool. The tool post 30 may include a turret tool post. The tool post driving unit 31 shown in FIG. 1 is a term collectively describing a gang-type tool post driving unit 33 and a back machining tool post driving unit 35. The gang-type tool post driving unit 33 moves the gang-type tool post 32 along the X-axis according to a command from the NC apparatus 70 and moves the gang-type tool post 32 along the Y-axis according to a command from the NC apparatus 70. The back machining tool post driving unit 35 moves the back machining tool post 34 along the Y-axis according to a command from the NC apparatus 70. The tool post 30 performs front machining of the workpiece W1 gripped by the front spindle 16 with the tool TO1, performs machining of the workpiece W1 after the front machining which is gripped by both the front spindle 16 and the back spindle 21 with the cut-off tool, and performs back machining of the workpiece W1 after cut off which is gripped by the back spindle 21 with the tool TO1. Accordingly, a product is formed from the workpiece W1.

As shown in FIG. 2, an operating unit 80, the front headstock driving unit 18, the front spindle rotation driving unit 16c, the gripping actuator 17a, the back headstock driving unit 23, the back spindle rotation driving unit 21c, the gripping actuator 22a, the gang-type tool post driving unit 33, the back machining tool post driving unit 35, the tool rotation driving unit 30c, and the like are connected to the NC apparatus 70. The front headstock driving unit 18, the back headstock driving unit 23, the gang-type tool post driving unit 33, and the back machining tool post driving unit 35 each include a servo motor and a servo amplifier (both not illustrated) and change a position of the spindle 11 or the tool post 30 according to a command from the NC apparatus 70. The NC apparatus 70 controls the position of the workpiece W1 or the tool TO1 by issuing commands to the elements (18, 23, 33, and 35). The front spindle rotation driving unit 16c and the back spindle rotation driving unit 21c each include a servo motor (for example, a built-in motor) and a servo amplifier (both not illustrated) and change a rotation angle of the spindle 11 according to a command from the NC apparatus 70. The NC apparatus 70 controls the rotation angle of the workpiece W1 around the spindle axis AX1 by issuing commands to the elements (16c and 21c).

The NC apparatus 70 includes a central processing unit (CPU) 71 which is a processor, a read only memory (ROM) 72 which is semiconductor memory, a random access memory (RAM) 73 which is semiconductor memory, a clock circuit 74, and an interface (I/F) 75 for peripheral elements (80, 18, 16c, 17a, 23, 21c, 22a, 33, 35, and 30c). A control program PR1 for interpreting and executing a machining program PR2 is written in the ROM 72. The ROM 72 may be a data-rewriteable semiconductor memory. The machining program PR2 created by an operator is rewriteably stored in the RAM 73. The machining program is also called an NC program. The CPU 71 uses the RAM 73 as a work area and executes the control program PR1 recorded in the ROM 72 to realize the functions of the NC apparatus 70.

The operating unit 80 includes an input unit 81 and a display unit 82 and functions as a user interface of the NC apparatus 70. For example, the input unit 81 is constituted of keys or a touch panel for accepting input of operations from the operator. For example, the display unit 82 is constituted of a display that displays contents of various settings for which input of operations from the operator has been accepted and various kinds of information related to the lathe 1. The operator can store the machining program PR2 in the RAM 73 using the operating unit 80 or an external computer (not illustrated).

In the present specific example, the NC apparatus 70, the headstock driving unit 13 (front headstock driving unit 18 and back headstock driving unit 23), and the spindle rotation driving unit (16c and 21c) constitute the control unit U1. The NC apparatus 70 and the headstock driving unit 13 control a relative positional relationship between the spindle 11 and the tool post 30 on the Z-axis along the spindle axis AX1. The NC apparatus 70 and the spindle rotation driving unit (16c and 21c) control the rotation of the spindle 11 on the C-axis around the spindle axis AX1.

The workpiece W1 shown in FIGS. 3A to 3C is a cylindrical shape having a hollow part W1h that penetrates along the spindle axis AX1. Accordingly, the workpiece W1 has an outer peripheral surface W1o facing outward and an inner peripheral surface W1i facing inward. The cross tool TO2 that is a rotary tool for forming the cross hole C1 that connects the outer peripheral surface W1o to the hollow part W1h in the workpiece W1 is attached to the tool post 30. A drill or an endmill can be used as the cross tool TO2, and the NC apparatus 70 may form an opening in the workpiece W1 with a drill as the cross tool TO2 and subsequently form the cross hole C1 with an endmill as the cross tool TO2. The cross tool TO2 shown in FIG. 3B is arranged with its longitudinal direction oriented in the X-axis direction and is rotatable around a rotary tool center axis AX4 along the X-axis. The rotary tool center axis AX4 is oriented along the machining center axis AX2 of the cross hole C1 and is perpendicular to the spindle axis AX1 on an X-Z plane when viewed from the Y-axis direction as shown in FIG. 3B. The cross hole C1 formed by the cross tool TO2 is a hole which penetrates the workpiece W1 so as to connect the outer peripheral surface W1o to the inner peripheral surface W1i around the machining center axis AX2 along the X-axis and may be described as a hole oriented along the machining center axis AX2 or a hole centered around the machining center axis AX2. In the plan view shown in FIG. 3A, the cross hole C1 is a circle and a center C1o of the cross hole C1 is on the spindle axis AX1.

When the cross hole C1 is formed in the workpiece W1 by the cross tool TO2, burrs may possibly be created on a ridge of the periphery C1p of the cross hole C1. The term "ridge" is used in consideration of the possibility of burrs created on the periphery C1p on both the outer peripheral surface W1o and the inner peripheral surface W1i. While a dedicated tool may conceivably be used to remove the burrs, in the present specific example, the general-purpose deburring tool TO3 such as that illustrated in FIG. 4B is attached to the tool post 30 such as the back machining tool post 34. The deburring tool TO3 shown in FIG. 4B is a ball endmill rotatable around the deburring tool center axis AX3 and includes, in a tip part thereof, a spherical cutting unit TO3b that assumes a spherical shape when rotating.

The tool rotation driving unit 30c of the tool post 30 rotates the deburring tool TO3 around the deburring tool center axis AX3. Note that while the orientation of the deburring tool center axis AX3 may be an orientation along the machining center axis AX2, in the present specific example, the orientation of the deburring tool center axis AX3 is an orientation along the spindle axis AX1 as shown in FIG. 4B.

First, an example of cutting the periphery C1p of the cross hole C1 on the outer peripheral surface W1o of the workpiece W1 with the deburring tool TO3 will be described.

FIG. 4A schematically illustrates the cutting position P1 that changes along the periphery C1p of the cross hole C1. FIG. 4B is a longitudinal sectional view which corresponds to a position indicated by A1-A1 in FIG. 3A and which schematically illustrates a situation where the deburring tool TO3 in an orientation along the spindle axis AX1 is arranged on the outer peripheral surface W1o of the cylindrical workpiece W1. FIG. 4C is a transverse sectional view which corresponds to a position indicated by A2-A2 in FIG. 3A and which schematically illustrates a situation where the spherical cutting unit TO3b is arranged on the outer peripheral surface W1o.

In FIG. 4A, the cutting position P1 of the periphery C1p by the spherical cutting unit TO3b changes from an initial position P0 on the spindle axis AX1 so as to make one clockwise turn on the periphery C1p. Obviously, the cutting position P1 may change so as to make one counterclockwise turn on the periphery C1p. Let $\theta yz$ be an angle between a line segment connecting the center C1o and the initial position P0 and a line segment connecting the center C1o and the cutting position P1. The NC apparatus 70 according to the present specific example causes the workpiece W1 to reciprocate in the Z-axis direction so as to align the workpiece W1 with the cutting position P1 while rotating the deburring tool TO3 as shown in FIG. 4B and rotates the workpiece W1 so as to align with the cutting position P1 as shown in FIG. 4C. Accordingly, burrs of the periphery C1p of the cross hole C1 on the outer peripheral surface W1o of the workpiece W1 are removed. Due to the deburring tool TO3 being a ball endmill, the ridge of the periphery C1p is cut so that an amount of cutting is constant over the entire periphery C1p. Accordingly, deburring of the periphery C1p can be performed using a general-purpose ball endmill instead of a specialized tool.

FIG. 5A is a longitudinal sectional view which corresponds to a position indicated by A1-A1 in FIG. 3A and which schematically illustrates a situation where the deburring tool TO3 in an orientation along the spindle axis AX1 is arranged on the inner peripheral surface W1i of the cylindrical workpiece W1. FIG. 5B is a transverse sectional view which corresponds to a position indicated by A2-A2 in FIG. 3A and which schematically illustrates a situation where the spherical cutting unit TO3b is arranged on the inner peripheral surface W1i. Note that as shown in FIG. 4A, the cutting position P1 of the periphery C1p by the spherical cutting unit TO3b changes from the initial position P0 on the spindle axis AX1 so as to make one clockwise (or counterclockwise) turn on the periphery C1p.

As shown in FIG. 5B, a maximum diameter TD around the deburring tool center axis AX3 in a portion in the deburring tool TO3 to be inserted into the cylindrical workpiece W1 is smaller than an inner diameter ID of the workpiece W1. Therefore, the NC apparatus 70 causes the workpiece W1 to reciprocate in the Z-axis direction so as to align the workpiece W1 with the cutting position P1 while rotating the deburring tool TO3 as shown in FIG. 5A and rotates the workpiece W1 so as to align with the cutting position P1 as shown in FIG. 5B. Accordingly, burrs of the periphery C1p of the cross hole C1 on the inner peripheral surface W1i of the workpiece W1 are removed. Due to the deburring tool TO3 being a ball endmill, the ridge of the periphery C1p is cut so that an amount of cutting is constant over the entire periphery C1p. Accordingly, deburring of the periphery C1p can be performed using a general-purpose ball endmill instead of a specialized tool.

Some lathes may not allow the deburring tool TO3 to be arranged in an orientation along the machining center axis AX2. For example, when the orientation of the tool TO1 attached to the back machining tool post 34 is limited to an orientation along the spindle axis AX1 as shown in FIG. 1 and the deburring tool TO3 is required to be attached to the back machining tool post 34, the deburring tool TO3 will not be oriented along the machining center axis AX2. In addition, in some cases, even when the tool TO1 can be arranged in an orientation along the machining center axis AX2 on the tool post 30, the deburring tool TO3 cannot be mounted on the tool post 30 because another tool is attached to a tool attachment location oriented along the machining center axis AX2 of the tool post 30 or for some other reason.

The deburring according to the present specific example can be readily performed by the deburring tool TO3 in an orientation along the spindle axis AX1.

Let us now assume a case of removing burrs remaining on the periphery C1p of the cross hole C1 at a plurality of locations on the inner peripheral surface W1i of the workpiece W1. When the orientation of the deburring tool TO3 is along the machining center axis AX2, the deburring tool TO3 must be significantly retracted in the direction of the machining center axis when changing the cross hole C1 that is an object to be deburred of the inner peripheral surface W1i. This is because after inserting the deburring tool TO3 into a given cross hole C1 to remove burrs on the inner peripheral surface W1i, the deburring tool TO3 must be retracted from the cross hole C1 and inserted into another cross hole C1 to remove burrs on the inner peripheral surface W1i. The larger the amount of retraction of the deburring tool TO3, the longer a cycle time of workpiece machining.

On the other hand, when the orientation of the deburring tool TO3 is along the spindle axis AX1, a small amount of retraction of the deburring tool TO3 will suffice when changing the cross hole C1 that is an object to be deburred of the inner peripheral surface W1i. This is because after inserting the deburring tool TO3 into the hollow part W1h of the workpiece W1 to remove burrs on the inner peripheral surface W1i of a given cross hole C1, burrs on the inner peripheral surface W1i of another cross hole C1 need only be removed by keeping the deburring tool TO3 inserted into the hollow part W1h. The smaller the amount of retraction of the deburring tool TO3, the shorter the cycle time of workpiece machining.

It is not easy to command the cutting position P1 shown in FIG. 4A in the three directions of the X-axis, the Y-axis, and the Z-axis. This is because not only do the Y-axis coordinate and the Z-axis coordinate change as the cutting position P1 changes, the X-axis coordinate also changes because the ridge of the periphery C1p of the cross hole C1 is on the outer peripheral surface W1o or the inner peripheral surface W1i of the workpiece W1. If three-dimensional coordinates (X-axis coordinate, Y-axis coordinate, and Z-axis coordinate) of the cutting position P1 are not appropriately calculated, there is a possibility that interference between the deburring tool TO3 and the workpiece W1 may occur and the periphery C1p may not be cut properly.

The present specific example avoids the possibility described above by controlling the relative Z-axis coordinate of the deburring tool TO3 and the C-axis angle of the workpiece W1 based on parameters that are easily comprehended by the operator.

First, referring to FIG. 6, an example of control of the cutting position P1 when cutting the periphery C1p of the cross hole C1 on the outer peripheral surface W1o of the workpiece W1 will be described. FIG. 6 schematically shows an example of determining a Z-axis coordinate Zp and a C-axis angle Cp corresponding to the cutting position P1 based on a diameter value (CD) of the cross hole (C1) and an outer diameter value (OD) of the workpiece W1. In FIG. 6, a plan view 101 of the workpiece W1 is shown in an upper part, a transverse sectional view 102 of the workpiece W1 is shown below the plan view 101, and calculation formulas of the Z-axis coordinate Zp and the C-axis angle Cp are shown in a lower part. In the plan view 101, an upward direction is a +Z direction in the Z-axis direction, a downward direction is a -Z direction in the Z-axis direction, a rightward direction is a +Y direction in the Y-axis direction, and a leftward direction is a -Y direction in the Y-axis direction. In the transverse sectional view 102, an upward direction is a +X direction in the X-axis direction, a downward direction is a -X direction in the X-axis direction, a rightward direction is the +Y direction in the Y-axis direction, and a leftward direction is the -Y direction in the Y-axis direction.

The value CD represents a diameter corresponding to the periphery C1p when viewing the cross hole C1 from the X-axis direction that is the machining center axis direction. The value OD represents a diameter corresponding to a circumference that passes through the periphery C1p around the spindle axis AX1 on a cross section (refer to transverse sectional view 102) which passes the center C1o of the cross hole C1 and which is perpendicular to the spindle axis AX1 or, in other words, the outer peripheral surface W1o. The $\theta yz$ is an angle between a line segment connecting the center C1o and the initial position P0 and a line segment connecting the center C1o and the cutting position P1. When the cutting position P1 is the initial position P0, it is assumed that the angle $\theta yz$ is 0° or 360° and the C-axis angle Cp is 0°. FIG. 6 also shows a point B corresponding to angle $\theta yz = 90°$ and a point A corresponding to angle $\theta yz = 270°$. A rate of change of the angle $\theta yz$ is determined based on, for example, a feed rate. The angle $\theta xy$ is an angle between a line segment connecting a center point O and the point A which corresponds to the spindle axis AX1 and a line segment connecting the center point O and the point B in the transverse sectional view 102.

The Z-axis coordinate Zp is a straight axis coordinate corresponding to the cutting position P1 that changes along the periphery C1p on the Z-axis. When the tool post 30 to which the deburring tool TO3 is attached does not move in the Z-axis direction, the Z-axis coordinate Zp corresponds to a coordinate on the Z-axis of the workpiece W1 being gripped by the spindle 11. The Z-axis coordinate Zp is represented by the following equation, using the diameter value CD corresponding to the periphery C1p and the angle $\theta yz$.

$$Zp = (CD/2) \times \cos\theta yz \cdots (1)$$

Accordingly, the Z-axis coordinate Zp corresponding to the cutting position P1 that changes along the periphery C1p is determined based on the value CD.

A radius value r corresponding to the outer peripheral surface W1o in the transverse sectional view 102 is half of the value OD.

$$r = OD/2 \cdots (2)$$

A radius value CD/2 corresponding to the value CD is represented by the following equation, using the radius value r and the angle θxy between the line segment between O and A and the line segment between O and B.

$$CD/2 = r \times \sin(\theta xy/2) \cdots (3)$$

Since it follows from the equation (3) above that sin(θxy/2) = CD/2r, the angle θxy is represented by the following equation.

$$\theta xy = 2 \times \arcsin(CD/2r) \cdots (4)$$

Note that "arcsin" is the inverse function of "sin" and is also written as "sin⁻¹".
It follows from the above equation (4) that the angle θxy is a fixed value calculated from the value CD and the value OD.

The C-axis angle Cp is a rotation angle corresponding to the cutting position P1 that changes along the periphery C1p on the C-axis and is the angle on the C-axis of the workpiece W1 gripped by the spindle 11. Since the C-axis angle Cp varies within a range expressed as -(θxy/2) ≤ Cp ≤ +(θxy/2), using the angle θxy between the line segment between O and A and the line segment between O and B and the angle θyz corresponding to the cutting position P1, the C-axis angle Cp is represented by the following equation.

$$Cp = (\theta xy/2) \times \sin\theta yz$$
$$= \arcsin(CD/2r) \times \sin\theta yz \cdots (5)$$

Accordingly, the C-axis angle Cp corresponding to the cutting position P1 that changes along the periphery C1p is determined based on the value CD and the value OD.

The same idea can be applied to cutting the periphery C1p of the cross hole C1 on the inner peripheral surface W1i of the workpiece W1 as illustrated in FIG. 7. FIG. 7 schematically shows an example of determining the Z-axis coordinate Zp and the C-axis angle Cp corresponding to the cutting position P1 based on a diameter value (CD) of the cross hole (C1) and an inner diameter value (OD) of the workpiece W1. In FIG. 7, the plan view 101 of the workpiece W1 is shown in an upper part, the transverse sectional view 102 of the workpiece W1 is shown below the plan view 101, and calculation formulas of the Z-axis coordinate Zp and the C-axis angle Cp are shown in a lower part.

The value CD is the same as the case where the surface to be deburred is the outer peripheral surface W1o and represents a diameter corresponding to the periphery C1p when viewing the cross hole C1 from the X-axis direction. The value OD represents a diameter corresponding to a circumference that passes through the periphery C1p around the spindle axis AX1 on a cross section (refer to transverse sectional view 102) which passes the center C1o of the cross hole C1 and which is perpendicular to the spindle axis AX1 or, in other words, the inner peripheral surface W1i. FIG. 7 also shows the point B corresponding to angle θyz = 90° and the point A corresponding to angle θyz = 270°. The angle θxy is an angle between a line segment connecting the center point O and the point A which corresponds to the spindle axis AX1 and a line segment connecting the center point O and the point B in the transverse sectional view 102.

The Z-axis coordinate Zp is the same as in the case where the surface to be deburred is the outer peripheral surface W1o and is represented by the following equation, using the diameter value CD corresponding to the periphery C1p and the angle θyz.

$$Zp = (CD/2) \times \cos\theta yz \cdots (6)$$

A radius value r corresponding to the inner peripheral surface W1i in the transverse sectional view 102 is half of the value OD.

$$r = OD/2 \cdots (7)$$

A radius value CD/2 corresponding to the value CD is represented by the following equation, using the radius value r and the angle θxy between the line segment between O and A and the line segment between O and B.

$$CD/2 = r \times \sin(\theta xy/2) \cdots (8)$$

From the equation (8) above, the angle θxy is represented by the following equation.

$$\theta xy = 2 \times \arcsin(CD/2r) \cdots (9)$$

Since the C-axis angle Cp varies within a range expressed as -(θxy/2) ≤ Cp ≤ +(θxy/2), using the angle θxy between the line segment between O and A and the line segment between O and B and the angle θyz corresponding to the cutting position P1, the C-axis angle Cp is represented by the following equation.

$$Cp = (\theta xy/2) \times \sin\theta yz$$
$$= \arcsin(CD/2r) \times \sin\theta yz \cdots (10)$$

From the above, by determining the Z-axis coordinate Zp and the C-axis angle Cp based on the value CD and the value OD, the deburring processing can be controlled by 2-axis control of the Z-axis and the C-axis. Therefore, by preparing a deburring command CM1 (refer to FIG. 8) suitable for deburring with 2-axis control, deburring can be performed without having to command the cutting position P1 in the three axes of the X-axis, the Y-axis, and the Z-axis.

(3) Specific example of deburring processing: FIG. 8 schematically illustrates the deburring processing performed by the NC apparatus 70. FIG. 8 also shows the deburring command CM1 included in the machining program PR2. The NC apparatus 70 shown in FIG. 2 starts the deburring processing upon reading the deburring command CM1 from the machining program PR2.

The deburring command CM1 shown in FIG. 8 has the format "G*** D** X** F**". The argument "***" after G indicates the number of the deburring command CM1. The argument "**" after D indicates the value OD (mm) of the outer diameter or the inner diameter of the workpiece W1. The argument "**" after X indicates the value CD (mm) of the diameter corresponding to the periphery C1p when viewing the cross hole C1 from the X-axis direction. The argument "**" after F indicates a feed rate per minute which is distributed between a speed of movement of the workpiece W1 along the Z-axis and a speed of rotation of the workpiece W1 on the C-axis. When the cutting position P1 makes one lap on the periphery C1p, since the Z-axis coordinate Zp starts from +CD/2 to -CD/2 and returns to +CD/2, a total movement distance of the workpiece W1 along the Z-axis is $2 \times CD$ (mm). In addition, since the C-axis angle Cp starts from 0°, temporarily reaches $+\theta xy/2$ and then $-\theta xy/2$, and returns to 0°, a total rotation amount of the workpiece W1 on the C-axis is $2 \times \theta xy$ (deg). For example, when it is assumed that a rotation amount of 1° corresponds to a movement distance of 1 mm, time (denoted by T(min)) required by the cutting position P1 to make one lap on the periphery C1p can be calculated by the following equation.

$$T = \{(2 \times CD)^2 + (2 \times \theta xy)^2\}^{1/2}/F$$
$$= 2 \times (CD^2 + \theta xy^2)^{1/2}/F \cdots (11)$$

If t (min) denotes the time elapsed since the start of movement of the cutting position P1 from the initial position P0, the angle $\theta yz$ (deg) corresponding to the cutting position P1 can be calculated, for example, by the following formula.

$$\theta yz = 360 \times (t/T) \cdots (12)$$

Therefore, the Z-axis coordinate Zp and the C-axis angle Cp can be determined by applying the angle $\theta yz$ corresponding to the cutting position P1 that changes along the periphery C1p to the above equations (1) to (10) together with the value CD and the value OD.

When an amount of cutting of the periphery C1p is to be reduced in consideration of the size of the spherical cutting unit TO3b of the deburring tool TO3, the command value of the value CD may be set slightly smaller than the actual diameter of the periphery C1p. Conversely, when an amount of cutting of the periphery C1p is to be increased, the command value of the value CD may be set slightly larger than the actual diameter of the periphery C1p. Furthermore, the amount of cutting of the periphery C1p can also be adjusted by adding, to the deburring command CM1, an argument that specifies an amount of offset for adjusting the amount of cutting of the periphery C1p.

Once the deburring processing shown in FIG. 8 is performed, the method of determining a control position of a machine tool is implemented. The method of determining a control position according to the present specific example includes steps (a1), (a2), and (a3) below.

(a1) The first step ST1 of acquiring the value CD representing a diameter corresponding to the periphery C1p when the hole (C1) is viewed from the machining center axis direction (X-axis direction) and the value OD representing a diameter corresponding to a circumference passing through the periphery C1p around the spindle axis AX1 on a cross section perpendicular to the spindle axis AX1 (corresponds to step S102).

(a2) The second step ST2 of determining a straight axis coordinate (Zp) corresponding to the cutting position P1 by the deburring tool TO3 on the straight axis (Z-axis) and the rotation angle (Cp) corresponding to the cutting position P1 on the rotation axis (C-axis) based on the value CD and the value OD so that the cutting position P1 changes along the periphery C1p (corresponds to steps S106 to S108).

(a3) A third step ST3 of controlling the relative positional relationship between the spindle 11 and the tool post 30 in the spindle axis direction (Z-axis direction) to the straight axis coordinate (Zp) and controlling rotation of the spindle 11 to the rotation angle (Cp) so that the cutting position P1 changes along the periphery C1p (corresponds to step S110).

Hereinafter, the term "step" will be omitted.

When the deburring processing starts, the NC apparatus 70 acquires an argument of the deburring command CM1 described above (S102). Accordingly, the value CD of the diameter corresponding to the periphery C1p when viewed from the X-axis direction and the value OD of the diameter corresponding to a circumference that passes through the periphery C1p when viewed from the Z-axis direction are acquired. Next, the NC apparatus 70 controls the Z-axis coordinate Zp and the C-axis angle Cp to the initial position P0 (S104). For example, the NC apparatus 70 controls the rotation of the deburring tool TO3 around the deburring tool center axis AX3, associates the coordinate of the workpiece W1 on the Z-axis to Zp = +CD/2, controls the C-axis angle of the workpiece W1 to 0°, and applies the spherical cutting unit TO3b of the deburring tool TO3 to the initial position P0 of the periphery C1p. Since the rotation of the deburring tool TO3 need only start before the spherical cutting unit TO3b is applied to the initial position P0, the deburring tool TO3 can be rotated after the coordinate of the workpiece W1 on the Z axis are controlled to Zp = +CD/2 or after the C-axis angle of the workpiece W1 is controlled to 0°.

Subsequently, according to equations (11) and (12) described above, the NC apparatus 70 determines the angle $\theta yz$ corresponding to the cutting position P1 based on a feed rate F (S106). Furthermore, according to equations (1) to (10) described above, the NC apparatus 70 determines the Z-axis coordinate Zp and the C-axis angle Cp at the angle $\theta yz$ based on the value CD and the value OD (S108).

Accordingly, the Z-axis coordinate Zp corresponding to the cutting position P1 that changes along the periphery C1p on the Z-axis and the C-axis angle Cp corresponding to the cutting position P1 on the C-axis are determined.

After determining the Z-axis coordinate Zp and the C-axis angle Cp, the NC apparatus 70 controls the relative positional relationship between the workpiece W1 and the deburring tool TO3 to the Z-axis coordinate Zp and controls the workpiece W1 around the spindle axis AX1 to the C-axis angle Cp (S110). Subsequently, the NC apparatus 70 determines whether or not the cutting position P1 has returned to the initial position P0 (S112). When the cutting position P1 has not returned to the initial position P0, the NC apparatus 70 repeats the processing of S106 to S112. When the cutting position P1 has returned to the initial position P0, the NC apparatus 70 ends the deburring processing.

As described above, the NC apparatus 70 controls the relative positional relationship between the spindle 11 and the tool post 30 in the Z-axis direction to the Z-axis coordinate Zp and controls rotation of the spindle 11 to the C-axis angle Cp so that the cutting position P1 changes along the periphery C1p of the cross hole C1.

FIG. 9 schematically shows a Z-axis movement and a C-axis rotation of the workpiece W1 during deburring. A left side of FIG. 9 shows the plan view 101 of the workpiece W1 in states 111 to 114 and a right side of FIG. 9 shows the transverse sectional view 102 of the workpiece W1 in the states 111 to 114.

In the state 111 where the cutting position P1 is at the initial position P0, since the Z-axis coordinate Zp is +CD/2, the workpiece W1 is at a position after moving by a distance CD/2 in the -Z direction and the C-axis angle Cp is 0°. Subsequently, when the cutting position P1 moves clockwise along the periphery C1p on the plan view 101, since the Z-axis coordinate Zp decreases, the workpiece W1 moves in the +Z direction and the C-axis angle Cp increases toward +$\theta xy$/2.

In the state 112 where the cutting position P1 is $\theta yz = 90°$, the Z-axis coordinate Zp becomes 0 and the C-axis angle Cp becomes +$\theta xy$/2. Subsequently, since the Z-axis coordinate Zp decreases, the workpiece W1 moves in the +Z direction and the C-axis angle Cp decreases toward 0°.

In the state 113 where the cutting position P1 is $\theta yz = 180°$, since the Z-axis coordinate Zp becomes -CD/2, the workpiece W1 is at a position after moving by a distance CD/2 in the +Z direction and the C-axis angle Cp becomes 0°. Subsequently, since the Z-axis coordinate Zp increases, the workpiece W1 moves in the -Z direction and the C-axis angle Cp decreases toward -$\theta xy$/2.

In the state 114 where the cutting position P1 is $\theta yz = 270°$, the Z-axis coordinate Zp becomes 0 and the C-axis angle Cp becomes -$\theta xy$/2. Subsequently, since the Z-axis coordinate Zp increases, the workpiece W1 moves in the -Z direction and the C-axis angle Cp increases toward 0°.

Once the cutting position P1 becomes $\theta yz = 360°$, a return is made to the state 111.

Accordingly, the ridge of the periphery C1p of the cross hole C1 is cut all the way around and burrs on the outer peripheral surface W1o and the inner peripheral surface W1i are removed.

Due to the deburring processing described above, burrs produced on the periphery C1p of the cross hole C1 are removed based on the value CD representing the diameter of the cross hole C1 viewed from the machining center axis direction and the value OD representing the outer diameter or the inner diameter of the workpiece W1 viewed from the spindle axis direction. The NC apparatus 70 need only control the two axes of the Z-axis along the spindle axis AX1 and the C-axis around the spindle axis AX1 instead of controlling the three axes of the X-axis, the Y-axis, and the Z-axis. Since the relative Z-axis coordinate Zp of the deburring tool TO3 with respect to the workpiece W1 is controlled in correspondence with the cutting position P1 while the C-axis angle Cp of the workpiece W1 is controlled in correspondence with the cutting position P1, interference between the deburring tool TO3 and the workpiece W1 is easily avoided. Therefore, interference between the deburring tool TO3 and the workpiece W1 due to command errors and the like when commanding the deburring tool TO3 to move in directions of three straight axes with respect to the workpiece W1 can be easily avoided.

(4) Modifications:

Various modifications of the present invention are conceivable.

For example, the machine tool is not limited to a lathe and may be a machining center or the like.

The lathe 1 may be a spindle-fixed lathe of which the front spindle 16 does not move in the Z-axis direction.

At least a part of processing of S102 to S108 and S112 shown in FIG. 8 may be performed outside the lathe 1 such as by an external computer.

The argument (OD) of D in the deburring command CM1 is not limited to a diameter value and may be a radius value or the like. The argument (CD) of X in the deburring command CM1 is not limited to a diameter value and may be a radius value or the like.

The hole that is an object of deburring is not limited to the cross hole C1 and may be a bottomed hole that is recessed from the outer peripheral surface W1o to the middle of the workpiece W1 along the machining center axis AX2, a horizontal hole for a solid workpiece, and the like.

A hole viewed from the machining center axis direction such as the cross hole C1 need only be shaped so as to have a portion that can be called a diameter and may be a long hole C2 that includes a straight portion in addition to a portion with an arc shape as illustrated in FIG. 10.

FIG. 10 schematically shows an example of determining a Z-axis coordinate Zp and a C-axis angle Cp corresponding to a cutting position P1 based on a diameter value (CD) of the long hole C2, an inner diameter value (OD) of the workpiece W1, and a center-to-center distance value (LC) of arc parts. In FIG. 10, the plan view 101 of the workpiece W1 is shown in an upper part, the transverse sectional view 102 of the workpiece W1 is shown below the plan view 101, and calculation formulas of the Z-axis coordinate Zp and the C-axis angle Cp are shown in a lower part.

As shown in the plan view 101, the periphery C1p of the long hole C2 when viewed from the X-axis direction includes the arc-shaped first arc part C21 in a range of Zp > 0, the arc-shaped second arc part C22 in a range of Zp < 0, and the straight part C23 that connects the first arc part C21 to the second arc part C22.

The value CD represents a diameter corresponding to the periphery C1p when viewing the first arc part C21 and the second arc part C22 from the X-axis direction. The value OD represents a diameter corresponding to a circumference that passes through the periphery C1p around the spindle axis AX1 on a cross section (refer to transverse sectional view 102) which is perpendicular to the spindle axis AX1 between centers C1o or, in other words, the inner peripheral surface W1i. FIG. 10 also shows the point B corresponding to $\theta yz = 90°$ on the first arc part C21, a point D corresponding to $\theta yz = 90°$ on the second arc part C22, a point C corresponding to $\theta yz = 270°$ on the second arc part C22, and the point A corresponding to $\theta yz = 270°$ on the first arc part C21.

FIG. 10 also shows the value LC representing a center-to-center distance meaning a distance between the center C1o corresponding to the first arc part C21 and the center C1o corresponding to the second arc part C22.

When the cutting position P1 is at the first arc part C21, the Z-axis coordinate Zp is represented by the following equation, using the diameter value CD corresponding to the periphery C1p, the angle $\theta yz$, and the value LC representing center-to-center distance.

$$Zp = (CD/2) \times \cos\theta yz + (LC/2) \cdots (13)$$

When the cutting position P1 is at the second arc part C22, the Z-axis coordinate Zp is represented by the following equation.

$$Zp = (CD/2) \times \cos\theta yz - (LC/2) \cdots (14)$$

When the cutting position P1 is at the first arc part C21 or the second arc part C22, a radius value CD/2 corresponding to the value CD is represented by the following equation, using the radius value r = OD/2 and the angle $\theta xy$.

$$CD/2 = r \times \sin(\theta xy/2) \cdots (15)$$

From the equation (15) above, the angle $\theta xy$ is represented by the following equation.

$$\theta xy = 2 \times \arcsin(CD/2r) \cdots (16)$$

Since the C-axis angle Cp varies within a range expressed as $-(\theta xy/2) \leq Cp \leq +(\theta xy/2)$, using the angle $\theta xy$ and the angle $\theta yz$ corresponding to the cutting position P1, the C-axis angle Cp is represented by the following equation.

$$Cp = (\theta xy/2) \times \sin\theta yz$$

$$= \arcsin(CD/2r) \times \sin\theta yz \cdots (17)$$

From the above, by determining the Z-axis coordinate Zp and the C-axis angle Cp with respect to each of the first arc part C21, the second arc part C22, and the straight part C23 based on the value CD, the value OD, and the value LC representing a center-to-center distance, the deburring processing can be controlled by 2-axis control of the Z-axis and the C-axis. By preparing a deburring command CM2 (refer to FIG. 11) suitable for deburring with 2-axis control, deburring can be performed without having to command the cutting position P1 in the three axes of the X-axis, the Y-axis, and the Z-axis.

FIG. 11 schematically illustrates the deburring processing of the periphery C1p of the long hole C2. FIG. 11 also shows the deburring command CM2 included in the machining program PR2. The NC apparatus 70 shown in FIG. 2 starts the deburring processing upon reading the deburring command CM2 from the machining program PR2. In the deburring processing shown in FIG. 11, S202 corresponds to the first step ST1, S206 to S210 corresponds to the second step ST2, and S212 corresponds to the third step ST3.

The deburring command CM2 shown in FIG. 11 has "L**" added to the deburring command CM1 shown in FIG. 8. The argument "**" after L indicates the value LC (mm) representing the center-to-center distance of the arc parts (C21 and C22).

When the cutting position P1 is at the straight part C23, a rate of the cutting position P1 that moves in the Z-axis direction assumes, for example, the feed rate F. The time (denoted by Tc (min)) required by the cutting position P1 to move on the arc parts (C21 and C22) can be calculated by the following equation.

$$Tc = \{(2 \times CD)^2 + (2 \times \theta xy)^2\}^{1/2}/F$$

$$= 2 \times (CD^2 + \theta xy^2)^{1/2}/F \cdots (18)$$

If tc (min) denotes the time the cutting position P1 was positioned on the arc parts (C21 and C22) after the start of movement from the initial position P0, the angle $\theta yz$ (deg) corresponding to the cutting position P1 can be calculated, for example, by the following formula.

$$\theta yz = 360 \times (tc/Tc) \cdots (19)$$

Therefore, the Z-axis coordinate Zp and the C-axis angle Cp when the cutting position P1 is on the arc parts (C21 and C22) can be determined by applying the angle $\theta yz$ corresponding to the cutting position P1 that changes along the periphery C1p to the above equations (13) to (17) together with the value CD, the value OD, and the value LC. When the cutting position P1 is at the straight part C23, the C-axis angle Cp is $+\theta xy/2$ or $-\theta xy/2$ and the Z-axis coordinate Zp changes according to the feed rate F.

When the deburring processing starts, the NC apparatus 70 acquires an argument of the deburring command CM2 described above (S202). Accordingly, the value CD of the diameter corresponding to the first arc part C21 and the second arc part C22 when viewed from the X-axis direction, the value OD of the diameter corresponding to a circumference that passes through the first arc part C21 or the second arc part C22 when viewed from the Z-axis direction, and the value LC representing the center-to-center distance of the arc parts (C21 and C22) are acquired. Next, the NC apparatus 70 controls the Z-axis coordinate Zp and the C-axis angle Cp to the initial position P0 (S204). For example, the NC apparatus 70 controls the rotation of the deburring tool TO3 around the deburring tool center axis AX3, associates the coordinate of the workpiece W1 on the Z-axis to Zp = +(CD/2) + (LC/2), controls the C-axis angle of the workpiece W1 to 0°, and applies the spherical cutting unit TO3b of the deburring tool TO3 to the initial position P0 of the periphery C1p.

Subsequently, according to equations (18) and (19) described above, the NC apparatus 70 determines the angle $\theta yz$ corresponding to the cutting position P1 based on the feed rate F (S206). When the cutting position P1 is on the arc parts (C21 and C22), according to equations (13) to (17) described above, the NC apparatus 70 determines the Z-axis coordinate Zp and the C-axis angle Cp at the angle $\theta yz$ based on the value CD, the value OD, and the value LC (S208). When the cutting position P1 is in the straight part C23, the NC apparatus 70 determines the Z-axis coordinate Zp based on the feed rate F (S210).

Accordingly, the Z-axis coordinate Zp corresponding to the cutting position P1 that changes along the periphery C1p on the Z-axis and the C-axis angle Cp corresponding to the cutting position P1 on the C-axis are determined with respect to each of the first arc part C21, the second arc part C22, and the straight part C23.

After determining the Z-axis coordinate Zp and the C-axis angle Cp, the NC apparatus 70 controls the relative positional relationship between the workpiece W1 and the deburring tool TO3 to the Z-axis coordinate Zp and controls the workpiece W1 around the spindle axis AX1 to the C-axis angle Cp (S212). Subsequently, the NC apparatus 70 determines whether or not the cutting position P1 has returned to the initial position P0 (S214). When the cutting position P1 has not returned to the initial position P0, the NC apparatus 70 repeats the processing of S206 to S214. When the cutting position P1 has returned to the initial position P0, the NC apparatus 70 ends the deburring processing.

As described above, the NC apparatus 70 controls the relative positional relationship between the spindle 11 and the tool post 30 in the Z-axis direction to the Z-axis coordinate Zp and controls rotation of the spindle 11 to the C-axis angle Cp so that the cutting position P1 changes along the periphery C1p of the long hole C2. Therefore, the example shown in FIGS. 10 and 11 can easily avoid interference between the deburring tool TO3 and the workpiece W1 during deburring of the periphery C1p of the long hole C2.

While the long hole C2 described above is a longitudinally-long hole of which a size along the Z-axis is greater than a size around the C-axis, the long hole may be a transversely-long hole of which a size around the C-axis is greater than a size along the Z-axis. When the long hole is a transversely-long hole, the NC apparatus 70 need only perform control to change the C-axis angle Cp without changing the Z-axis coordinate Zp in a portion of the periphery that is not the arc parts.

Furthermore, the diameter corresponding to the first arc part and the diameter corresponding to the second arc part may differ from each other. In this case, the NC apparatus 70 need only perform control to change the Z-axis coordinate Zp at a constant speed and change the C-axis angle Cp at a constant speed of rotation in a portion connecting the arc parts in the periphery.

(5) Conclusion:

As described above, according to the present invention, a configuration that can easily avoid interference between a deburring tool and a workpiece due to command errors and the like when commanding the deburring tool to move in directions of three straight axes with respect to the workpiece and the like can be provided through various aspects. Obviously, the basic operations and effects described above can be obtained even with aspects solely made up of the constituent features related to the independent claims.

In addition, a configuration in which each of the configurations disclosed in the above examples is mutually substituted or combined, a configuration in which known techniques and each of the configurations disclosed in the above examples are mutually substituted or combined, and the like can also be implemented. The present invention also includes such configurations.

**Claims**

1. A machine tool, comprising:

   a spindle which rotates together with a workpiece around a spindle axis;
   a tool post to which is attached a deburring tool that cuts a periphery of a hole in an orientation along a machining center axis perpendicular to the spindle axis in the workpiece; and
   a control unit which controls a relative positional relationship between the spindle and the tool post on a straight axis along the spindle axis and a rotation of the spindle on a rotation axis around the spindle axis, wherein
   the control unit
   acquires a value (CD) representing a diameter corresponding to the periphery when the hole is viewed from a direction of the machining center axis along the machining center axis and a value (OD) representing a diameter corresponding to a circumference passing through the periphery around the spindle axis on a cross section perpendicular to the spindle axis,
   determines a straight axis coordinate corresponding to a cutting position that changes along the periphery on the straight axis and a rotation angle corresponding to the cutting position on the rotation axis based on the value (CD) and the value (OD), and
   controls the relative positional relationship in the direction of the spindle axis along the spindle axis to the straight axis coordinate and controls rotation of the spindle to the rotation angle so that the cutting position changes along the periphery.

2. The machine tool according to claim 1, wherein

   the deburring tool is attached to the tool post in an orientation along the spindle axis, and
   the tool post rotates the deburring tool around a deburring tool center axis along the spindle axis.

3. The machine tool according to claim 1, wherein

   the workpiece has a cylindrical shape,
   the deburring tool is attached to the tool post in an orientation along the spindle axis,
   the tool post rotates the deburring tool around a deburring tool center axis along the spindle axis, and
   a maximum diameter around the deburring tool center axis in a portion in the deburring tool to be inserted into the cylindrical workpiece is smaller than an inner diameter of the workpiece.

4. The machine tool according to any one of claims 1 to 3, wherein

   the periphery when viewed from a direction of the machining center axis includes an arc-shaped first arc part, an arc-shaped second arc part, and a straight part that connects the first arc part to the second arc part,
   the control unit
   acquires the value (CD), the value (OD), and a value (LC) representing a center-to-center distance between the first arc part and the second arc part and, based on the value (CD), the value (OD), and the value (LC), determines the straight axis coordinate corresponding to the cutting position and the rotation angle corresponding to the cutting position with respect to each of the first arc part, the second arc part, and the straight part, and
   controls the relative positional relationship in the direction of the spindle axis to the straight axis coordinate and controls rotation of the spindle to the rotation angle so that the cutting position changes along the first arc part, the second arc part, and the straight part.

5. The machine tool according to any one of claims 1 to 3, wherein

   a ball endmill is attached to the tool post as the deburring tool, and
   the tool post rotates the ball endmill around a center axis of the ball endmill.

6. A method of determining a control position of a machine tool which includes a spindle which rotates together with a workpiece around a spindle axis and a tool post to which is attached a deburring tool that cuts a periphery of a hole in an orientation along a machining center axis perpendicular to the spindle axis in the workpiece, the machine tool controlling a relative positional relationship between the spindle and the tool post on a straight axis along the spindle axis and a rotation of the spindle on a rotation axis around the spindle axis, the method of determining a control position of a machine tool comprising:

   a first step of acquiring a value (CD) representing a diameter corresponding to the periphery when the hole is viewed from a direction of the machining center axis along the machining center axis and a value (OD) representing a diameter corresponding to a circumference passing through the periphery around the spindle axis on a cross section perpendicular to the spindle axis; and

a second step of determining a straight axis coordinate corresponding to a cutting position by the deburring tool on the straight axis and a rotation angle corresponding to the cutting position on the rotation axis based on the value (CD) and the value (OD) so that the cutting position changes along the periphery.

FIG. 1

FIG. 2

LATHE 1

| NC APPARATUS 70 | OPERATING UNIT 80 |
| | INPUT UNIT 81 | DISPLAY UNIT 82 |

CLOCK CIRCUIT 74

CPU 71

ROM 72
CONTROL PROGRAM PR1

RAM 73
MACHINING PROGRAM PR2

I/F 75

FRONT HEADSTOCK DRIVING UNIT 18 — 15

FRONT SPINDLE ROTATION DRIVING UNIT 16c — 16

GRIPPING ACTUATOR 17a

BACK HEADSTOCK DRIVING UNIT 23 — 20

BACK SPINDLE ROTATION DRIVING UNIT 21c — 21

GRIPPING ACTUATOR 22a

GANG-TYPE TOOL POST DRIVING UNIT 33 — 32

BACK MACHINING TOOL POST DRIVING UNIT 35 — 34

TOOL ROTATION DRIVING UNIT 30c — TO1

U1

FIG. 3A

FIG. 3B

FIG. 3C

FIG. 4A

FIG. 4B

FIG. 4C

FIG. 5A

FIG. 5B

FIG. 6

$$Zp = \frac{CD}{2} \times \cos\theta yz$$

$$\theta xy = 2 \times \sin^{-1}\frac{CD}{2r} \;,\; r = \frac{OD}{2}$$

$$Cp = \frac{\theta xy}{2} \times \sin\theta yz$$
$$= \sin^{-1}\frac{CD}{2r} \times \sin\theta yz$$

FIG. 7

$$Zp = \frac{CD}{2} \times \cos \theta yz$$

$$\theta xy = 2 \times \sin^{-1} \frac{CD}{2r} \; , r = \frac{OD}{2}$$

$$Cp = \frac{\theta xy}{2} \times \sin \theta yz$$
$$= \sin^{-1} \frac{CD}{2r} \times \sin \theta yz$$

FIG. 8

```
          ┌─────────────────────────────────────┐
          │        DEBURRING PROCESSING         │
          └─────────────────────────────────────┘
                           │
S102 ┌─────────────────────────────────────────────┐  ◄── ST1
     │   ACQUIRE ARGUMENT OF DEBURRING COMMAND      │
     │            G*** D** X** F**                  │  ── CM1
     └─────────────────────────────────────────────┘
                           │
S104 ┌─────────────────────────────────────────────┐
     │   CONTROL Z-AXIS COORDINATE Zp AND C-AXIS    │
     │       ANGLE Cp TO INITIAL POSITION P0        │
     └─────────────────────────────────────────────┘
                           │
S106 ┌─────────────────────────────────────────────┐
     │   DETERMINE ANGLE θyz AT CUTTING             │
     │     POSITION BASED ON FEED RATE F            │
     └─────────────────────────────────────────────┘   ST2
S108 ┌─────────────────────────────────────────────┐
     │   DETERMINE Z-AXIS COORDINATE Zp AND C-AXIS  │
     │         ANGLE Cp AT ANGLE θyz BASED ON       │
     │  DIAMETER VALUE (CD) AND DIAMETER VALUE (OD) │
     └─────────────────────────────────────────────┘
                           │
S110 ┌─────────────────────────────────────────────┐  ◄── ST3
     │       CONTROL Z-AXIS COORDINATE              │
     │      TO Zp AND C-AXIS ANGLE TO Cp            │
     └─────────────────────────────────────────────┘
                           │
S112          ◇ RETURNED TO INITIAL ◇    NO
              ◇      POSITION P0?   ◇───────┐
                           │ YES
          ┌─────────────────────────────────────┐
          │                END                  │
          └─────────────────────────────────────┘
```

FIG. 9

FIG. 10

$$Zp = \frac{CD}{2} \times \cos\theta yz \pm \frac{LC}{2}$$

$$Cp = \frac{\theta xy}{2} \times \sin\theta yz$$

$$= \sin^{-1}\frac{CD}{2r} \times \sin\theta yz$$

FIG. 11

```
                    ┌──────────────────────────────────┐
                    │      DEBURRING PROCESSING         │
                    └──────────────────────────────────┘
                                     │
S202 ┌───────────────────────────────────────────────┐ ◄── ST1
     │  ACQUIRE ARGUMENT OF DEBURRING COMMAND         │
     │        G*** D** X** F** L**                     │ ── CM2
     └───────────────────────────────────────────────┘
                                     │
S204 ┌───────────────────────────────────────────────┐
     │  CONTROL Z-AXIS COORDINATE Zp AND              │
     │  C-AXIS ANGLE Cp TO INITIAL POSITION P0        │
     └───────────────────────────────────────────────┘
                                     │
S206 ┌───────────────────────────────────────────────┐
     │  DETERMINE ANGLE θyz AT CUTTING                 │
     │  POSITION BASED ON FEED RATE F                 │
     └───────────────────────────────────────────────┘
                                     │
S208 ┌───────────────────────────────────────────────┐
     │  WHEN CUTTING POSITION P1 IS IN ARC            │
     │  PART, DETERMINE Z-AXIS COORDINATE             │  ST2
     │  Zp AND C-AXIS ANGLE Cp AT ANGLE               │
     │  θyz BASED ON CD, OD, AND LC                    │
     └───────────────────────────────────────────────┘
                                     │
S210 ┌───────────────────────────────────────────────┐
     │  WHEN CUTTING POSITION P1 IS IN                │
     │  STRAIGHT PART, DETERMINE Z-AXIS               │
     │  COORDINATE Zp BASED ON FEED RATE F            │
     └───────────────────────────────────────────────┘
                                     │
S212 ┌───────────────────────────────────────────────┐ ◄── ST3
     │  CONTROL Z-AXIS COORDINATE TO                  │
     │  Zp AND C-AXIS ANGLE TO Cp                     │
     └───────────────────────────────────────────────┘
                                     │
S214               ◇ RETURNED TO INITIAL ◇ ──── NO
                     ◇  POSITION P0?     ◇
                                     │
                                   YES
                    ┌──────────────────────────────────┐
                    │               END                 │
                    └──────────────────────────────────┘
```

Europäisches
Patentamt

European
Patent Office

Office européen
des brevets

# EUROPEAN SEARCH REPORT

**Application Number**

EP 25 18 6214

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2023/209999 A1 (FANUC CORP [JP]) 2 November 2023 (2023-11-02) * the whole document * | 1-6 | INV. B23C3/12 G05B19/41 |
| A | Anonymous: "G Code Overview", , 6 May 2012 (2012-05-06), pages 1-17, XP093330120, Retrieved from the Internet: URL:https://web.archive.org/web/2012050612 4417/https://linuxcnc.org/docs/html/gcode/ overview.html [retrieved on 2025-10-29] * the whole document * | 1-6 | |
| A | US 2023/060229 A1 (KAMO SHOTARO [JP] ET AL) 2 March 2023 (2023-03-02) * the whole document * | 1-6 | |

**TECHNICAL FIELDS SEARCHED (IPC)**

B23C
B23G
G05B

The present search report has been drawn up for all claims

| Place of search | Date of completion of the search | Examiner |
|---|---|---|
| The Hague | 3 November 2025 | Antonopoulos, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 6214

This annex lists the patent family members relating to the patent documents cited in the above-mentioned European search report.
The members are as contained in the European Patent Office EDP file on
The European Patent Office is in no way liable for these particulars which are merely given for the purpose of information.

03-11-2025

| Patent document cited in search report | | Publication date | Patent family member(s) | | Publication date |
|---|---|---|---|---|---|
| WO 2023209999 | A1 | 02-11-2023 | CN | 119137553 A | 13-12-2024 |
| | | | DE | 112022006707 T5 | 24-12-2024 |
| | | | JP | 7747883 B2 | 01-10-2025 |
| | | | JP | WO2023209999 A1 | 02-11-2023 |
| | | | TW | 202400354 A | 01-01-2024 |
| | | | US | 2025258475 A1 | 14-08-2025 |
| | | | WO | 2023209999 A1 | 02-11-2023 |
| US 2023060229 | A1 | 02-03-2023 | CN | 115933545 A | 07-04-2023 |
| | | | EP | 4141593 A1 | 01-03-2023 |
| | | | JP | 7733292 B2 | 03-09-2025 |
| | | | JP | 2023031575 A | 09-03-2023 |
| | | | KR | 20230030526 A | 06-03-2023 |
| | | | TW | 202309688 A | 01-03-2023 |
| | | | US | 2023060229 A1 | 02-03-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2024109715 A

- WO 2014178355 A